(19) Europäisches Patentamt / European Patent Office / Office européen des brevets

(11) **EP 4 730 737 A1**

(12) **EUROPEAN PATENT APPLICATION**
published in accordance with Art. 153(4) EPC

(43) Date of publication:
**22.04.2026 Bulletin 2026/17**

(21) Application number: **24830574.0**

(22) Date of filing: **18.06.2024**

(51) International Patent Classification (IPC):
*H04L 41/14* (2022.01)    *H04L 41/16* (2022.01)
*H04B 1/04* (2006.01)    *H04B 1/16* (2006.01)
*H04W 84/12* (2009.01)

(52) Cooperative Patent Classification (CPC):
**H04B 1/04; H04B 1/16; H04L 41/14; H04L 41/16; H04W 84/12**

(86) International application number:
**PCT/CN2024/099939**

(87) International publication number:
**WO 2025/001928 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 CN 202310810064**

(71) Applicant: ZTE CORPORATION
**Shenzhen, Guangdong 518057 (CN)**

(72) Inventors:
• **HUANG, Qisheng**
Shenzhen, Guangdong 518057 (CN)
• **WANG, Yi**
Shenzhen, Guangdong 518057 (CN)
• **ZHANG, Yaodong**
Shenzhen, Guangdong 518057 (CN)
• **WANG, Zisheng**
Shenzhen, Guangdong 518057 (CN)

(74) Representative: **Deambrogi, Edgardo et al**
**Jacobacci & Partners S.p.A.**
**Corso Emilia 8**
**10152 Torino (IT)**

(54) **AI MODEL PARAMETER INTERACTION METHOD AND DEVICE**

(57) Provided are an AI model parameter interaction method and apparatus. The method is performed by a Wi-Fi transmitter, and comprises: after AI model parameters are embedded into an auto-encoder of the Wi-Fi transmitter, transmitting a data frame with a special sequence to a Wi-Fi receiver by means of the auto-encoder of the Wi-Fi transmitter, so that the Wi-Fi receiver identifies the data frame according to the special sequence, and decodes the data frame by means of an auto-encoder of the Wi-Fi receiver when successfully identifying the data frame. The auto-encoder improves the encoding efficiency and decoding accuracy of conventional Wi-Fi transmitters and receiver systems, thereby enhancing Wi-Fi network performance and user experience, and solves the problem in the related art that there is no specific implementation of applying AI/ML to WLAN, which fails to achieve the effect of enhancing network performance and user experience by means of AI/ML.

After AI model parameters are embedded into an auto-encoder of the Wi-Fi transmitter, a data frame with a special sequence is transmitted to a Wi-Fi receiver by means of the auto-encoder of the Wi-Fi transmitter, so that the Wi-Fi receiver identifies the data frame according to the special sequence, and decodes the data frame by means of an auto-encoder of the Wi-Fi receiver when successfully identifying the data frame — S301

**FIG. 3**

**Description**

**Cross-Reference to Related Application**

The present invention claims the priority of Chinese Patent Application CN202310810064.7, filed on June 30, 2023 and entitled "AI Model Parameter Interaction Method and Device", the invention of which is incorporated herein by reference in its entirety.

**Technical Field**

Embodiments of the present invention relate to the field of communications, and in particular, to an AI model parameter interaction method and apparatus.

**Background**

Conventional artificial intelligence/machine learning (AI/ML) technologies are based on centralized models, which require the exchange of large amounts of data between data sources and centralized servers. Recently, distributed AI/ML algorithms such as federated learning have been developed, which allows for more analysis at the source and reduces the amount of data that needs to be exchanged.

Research has shown that AI/ML algorithms can help improve the performance of wireless communication networks by providing better resource utilization, lower energy consumption, higher reliability, and robustness to changing environments. As these algorithms become more mature and cost-effective, wireless local area networks (WLAN) may utilize AI/ML to enhance network performance and user experience.

However, currently, there is no specific implementation for applying AI/ML to WLAN, which fails to achieve the effect of enhancing network performance and user experience by means of AI/ML.

**Summary**

Embodiments of the present invention provide an AI model parameter interaction method and apparatus, so as to at least solve the problem in the related art that there is no specific implementation for applying AI/ML to WLAN, which fails to achieve the effect of enhancing network performance and user experience by means of AI/ML.

According to an embodiment of the present invention, provided is an AI model parameter interaction method, performed by a Wi-Fi transmitter, wherein the Wi-Fi transmitter includes an auto-encoder of the Wi-Fi transmitter, and the method includes:

after AI model parameters are embedded into an auto-encoder of the Wi-Fi transmitter, transmitting a data frame with a special sequence to a Wi-Fi receiver by means of the auto-encoder of the Wi-Fi transmitter, so that the Wi-Fi receiver identifies the data frame according to the special sequence, and decodes the data frame by means of an auto-encoder of the Wi-Fi receiver when successfully identifying the data frame.

In an exemplary embodiment, after transmitting a data frame with the special sequence to the Wi-Fi receiver by means of the auto-encoder of the Wi-Fi transmitter, the method further includes:

monitoring a feedback message of the Wi-Fi receiver; and

in a case when no feedback message transmitted by the Wi-Fi receiver is monitored within preset time, determining that the AI model parameters of the auto-encoder of the Wi-Fi transmitter need to be updated.

In an exemplary embodiment, the method further includes:
in a case where the AI model parameters of the auto-encoder of the Wi-Fi transmitter need to be updated, transmitting a trigger frame with a special sequence to the Wi-Fi receiver within an inter-frame space, so as to trigger the auto-encoder of the Wi-Fi receiver to feed back new AI model parameters.

In an exemplary embodiment, the method further includes:
receiving the new AI model parameters fed back by the auto-encoder of the Wi-Fi receiver, and transmitting an acknowledgement message to the Wi-Fi receiver.

In an exemplary embodiment, the data frame with the special sequence carries channel state information (CSI) content fed back.

According to another embodiment of the present invention, provided is an AI model parameter interaction method, performed by a Wi-Fi receiver, wherein the Wi-Fi receiver includes an auto-encoder and a classifier of the Wi-Fi receiver, and the method includes:

after AI model parameters are embedded into the auto-encoder of the Wi-Fi transmitter, receiving, by means of the classifier, a data frame with a special sequence transmitted by the auto-encoder of the Wi-Fi transmitter, and identifying the data frame according to the special sequence; and

n a case when the data frame is successfully identified, decoding the data frame by means of the auto-encoder of the Wi-Fi receiver.

In an exemplary embodiment, after decoding the data frame by means of the auto-encoder of the Wi-Fi receiver, the method further includes:

in a case where the AI model parameters of the auto-encoder of the Wi-Fi transmitter need to be updated, receiving a trigger frame with a special sequence transmitted by the Wi-Fi transmitter;

identifying, by means of the classifier, the trigger frame according to the special sequence;

in a case where the trigger frame is successfully identified, training the auto-encoder of the Wi-Fi receiver to obtain new AI model parameters; and

feeding back the new AI model parameters to the auto-encoder of the Wi-Fi transmitter.

In an exemplary embodiment, identifying, by means of the classifier, the trigger frame according to the special sequence includes:

matching the special sequence of the trigger frame with a locally stored special sequence; and

in a case when matching is successful, determining that the identification is successful.

According to still another embodiment of the present invention, provided is an AI model parameter interaction apparatus, located at a Wi-Fi transmitter, wherein the Wi-Fi transmitter includes an auto-encoder of the Wi-Fi transmitter, and the apparatus includes:
a first transmission module, configured to, after AI model parameters are embedded into an auto-encoder of the Wi-Fi transmitter, transmit a data frame with a special sequence to a Wi-Fi receiver by means of the auto-encoder of the Wi-Fi transmitter, so that the Wi-Fi receiver identifies the data frame according to the special sequence, and decodes the data frame by means of an auto-encoder of the Wi-Fi receiver when successfully identifying the data frame.

According to still another embodiment of the present invention, provided is another AI model parameter interaction apparatus, located at a Wi-Fi receiver, wherein the Wi-Fi receiver includes an auto-decoder and a classifier of the Wi-Fi receiver, and the apparatus includes:

a first receiving module, configured to, after AI model parameters are embedded into the auto-encoder of the Wi-Fi transmitter, receive, by means of the classifier, a data frame with a special sequence transmitted by the auto-encoder of the Wi-Fi transmitter, and identify the data frame according to the special sequence; and

a decoding module, configured to, in a case when the data frame is successfully identified, decode the data frame by means of the auto-encoder of the Wi-Fi receiver.

According to still another embodiment of the present invention, further provided is a computer readable storage medium, wherein a computer program is stored in the computer readable storage medium, and the computer program is configured to execute, when running, the steps in any one of the described method embodiments.
According to still another embodiment of the present invention, further provided is an electronic device, including a memory and a processor; a computer program that is stored in the memory, and the processor is configured to execute the computer program so as to perform the operations in any one of the described method embodiments.

## Brief Description of the Drawings

Fig. 1 is a hardware structure block diagram of a mobile terminal of an AI model parameter interaction method according to an embodiment of the present invention;

Fig. 2 is a network architecture diagram of a Wi-Fi system according to an embodiment of the present invention;

Fig. 3 is a flowchart of AI model parameter interaction according to an embodiment of the present invention;

Fig. 4 is a schematic diagram of AI model parameter interaction within a DIFS time according to an embodiment of the present invention;

Fig. 5 is a schematic diagram of AI model parameter interaction within an EIFS time according to an embodiment of the present invention;

Fig. 6 is a flowchart of AI model parameter interaction according to another embodiment of the present invention;

Fig. 7 is a structural block diagram of an AI model parameter interaction apparatus according to an embodiment of the present invention;

Fig. 8 is a structural block diagram of an AI model parameter interaction apparatus according to another embodiment of the present invention.

## Detailed Description of the Embodiments

The embodiments of the present invention are described in detail with reference to the accompanying drawings and in conjunction with the embodiments.

It should be noted that the terms "first", "second" etc. in the description, claims, and accompanying drawings of the present invention are used to distinguish similar objects, and are not necessarily used to describe a specific sequence or order.

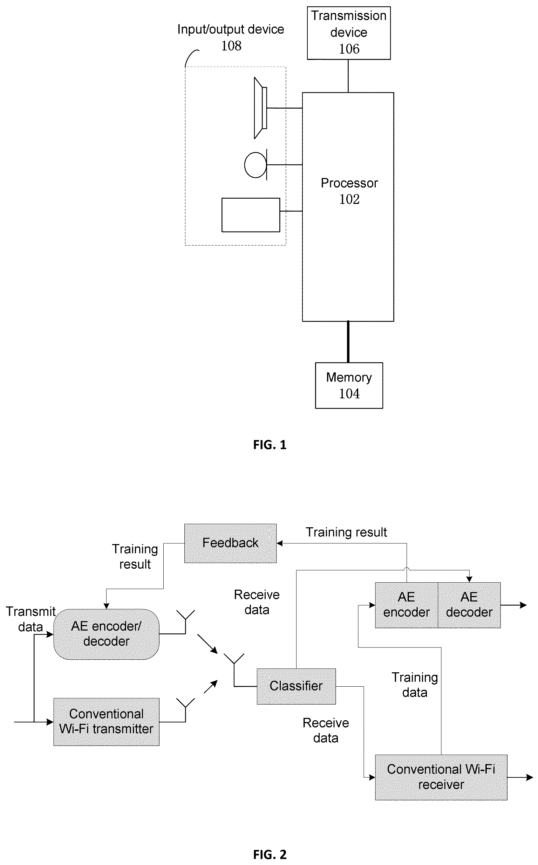

Method embodiments provided in the embodiments of the present invention may be executed in a mobile terminal, a computer terminal, or similar computing apparatuses. Taking the mobile terminal running as an example, Fig. 1 is a hardware structure block diagram of a mobile terminal of an AI model parameter interaction method according to an embodiment of the present invention. As shown in Fig. 1, the mobile terminal may include one or more (only one is shown in Fig. 1) processors 102 (the processors 102 may include, but are not limited to, a microprocessor MCU or a processing device such as a programmable logic device FPGA) and a memory 104 configured to store data, wherein the mobile terminal can further include a transmission device 106 for a communication function and an input/output device 108. Those ordinarily skilled in the art can appreciate that the structure shown in Fig. 1 is for illustrative purposes only, but not limit the structure of the mobile terminal. For example, the mobile terminal may also include more or fewer components than that shown in Fig. 1, or have a different configuration than that shown in Fig. 1.

The memory 104 may be configured to store a computer program, for example, a software program and a module of application software, such as a computer program corresponding to the AI model parameter interaction method in the embodiment of the present invention. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include memories remotely arranged with respect to the processor 102, and these remote memories may be connected to the mobile terminal over a network. Embodiments of the described network include, but are not limited to the Internet, an intranet, a local area network, a mobile communication network, and a combination thereof.

The transmission device 106 is configured to receive or transmit data over a network. Specific embodiments of the described network may include a wireless network provided by a communication provider of the mobile terminal. In an embodiment, the transmission device 106 includes a network interface controller (NIC) which may be connected to other network devices by means of a base station, thereby being able to communicate with the Internet. In one embodiment, the transmission device 106 may be a radio frequency (RF) module for communicating wirelessly with the Internet.

Fig. 2 is a network architecture diagram of a Wi-Fi system according to an embodiment of the present invention, and the embodiment of the present invention may operate on the network architecture shown in Fig. 2. As shown in Fig. 2, the network architecture of the Wi-Fi system according to the embodiment of the present invention mainly includes a Wi-Fi transmitter and a Wi-Fi receiver, wherein the Wi-Fi transmitter includes an auto-encoder (AE) and a conventional Wi-Fi transmitter, and the Wi-Fi receiver includes the auto-encoder (AE), a classifier and a conventional Wi-Fi receiver, the functions of the modules are as follows:

The auto-encoders can be respectively provided at a Wi-Fi transmitter and a Wi-Fi receiver, and include an AE encoder and an AE decoder; the AE encoder uses an encoded vector as an output, and the AE decoder uses an encoded vector as an input; a layer between the input of the encoder and the encoded vector, as well as a layer between the output of the decoder and the decoded vector are referred to as hidden layers; the structure of the hidden layer may be a convolutional neural network (CNN), may be a dense neural structure or a recurrent neural network (RNN) structure.

The AE encoder is configured to encode transmitted data, redefine the functional encoding modulation in a way that is similar to the conventional encoding modulation used in Wi-Fi transmitters, or serve as a transmitter to perform compression encoding on transmitted content such as channel estimation data.

The AE decoder is configured to decode the channel state information (CSI) content compressed and fed back by the encoder, or to serve as a receiver to detect and demodulate the transmitted content.

A conventional Wi-Fi transmitter consists of an encoder, a modulator, and a radio-frequency front-end, and is configured to transmit encoded data.

The classifier is communicatively connected to the auto-encoder of the Wi-Fi transmitter and the conventional Wi-Fi transmitter, and receives data transmitted by the Wi-Fi transmitter. The classifier is one of the most important hardware devices in the present invention, and has two main functions: identifying a trigger frame transmitted by the AE of the Wi-Fi transmitter, and identifying an encoded vector encoded by the AE of the Wi-Fi transmitter.

The data field of the trigger frame is a special sequence. Identifying the trigger signal involves matching the special sequence on the trigger frame with a locally stored feature sequence, wherein upon successful matching, it can be determined that the identification is successful, and the AE parameter exchange may be continued. The encoded vector encoded by the AE of the Wi-Fi transmitter can be scrambled using a special pseudo-noise (PN) sequence. The classifier can use a locally cached PN sequence for detection and identification. If the identification is successful, the encoded vector encoded by the AE of the Wi-Fi transmitter can be transmitted to the AE decoder of the Wi-Fi receiver for decoding using the AE decoder of the Wi-Fi receiver; if the identification is not successful, it proceeds to the detection process of the conventional Wi-Fi receiver.

The conventional Wi-Fi receiver is configured to demodulate and decode the received data.

In addition, it should be noted that the feedback link is not a hardware part, but is a frame interaction sequence adapted to the hardware structure. When the AE is used for signal modulation and demodulation, the feedback link is used for feeding back, to the Wi-Fi transmitter, parameters in the AE encoder which have been trained by the Wi-Fi receiver, and loading the parameters to the AE encoder of the Wi-Fi transmitter.

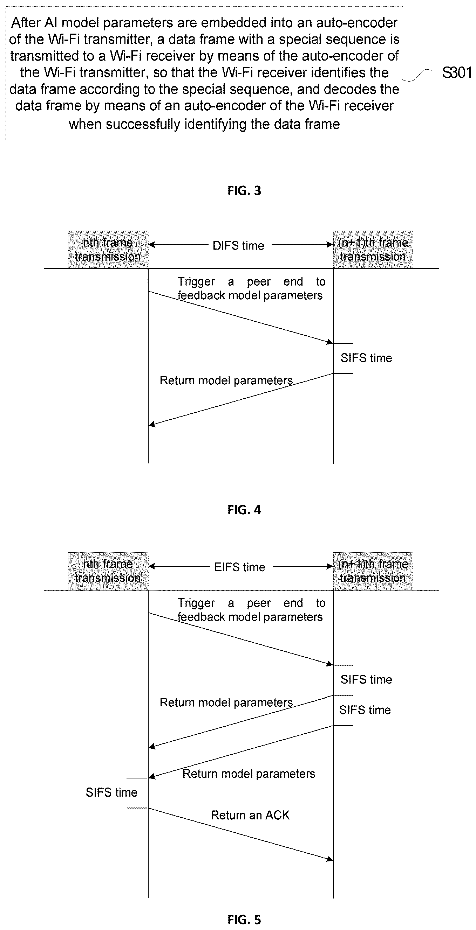

Provided in the present embodiment is an AI model parameter interaction method of a network architecture, running in the described Wi-Fi system. Fig. 3 is a flowchart of AI model parameter interaction according to an embodiment of the present invention, which is performed by a Wi-Fi transmitter, wherein the Wi-Fi transmitter includes an auto-encoder of the Wi-Fi transmitter. As shown in Fig. 3, the flow includes the following steps:

step S301: after AI model parameters are embedded into an auto-encoder of the Wi-Fi transmitter, a data frame with a special sequence is transmitted to a Wi-Fi receiver by means of the auto-encoder of the Wi-Fi transmitter, so that the Wi-Fi receiver identifies the data frame according to the special sequence, and decodes the data frame by means of an auto-encoder of the Wi-Fi receiver when successfully identifying the data frame.

As an example, in a case where the AI model parameters are embedded into the auto-encoder of the Wi-Fi transmitter, the auto-encoder (AE) of the Wi-Fi transmitter can be used preferentially for frame transmission. During transmission, a special field can be added to the data frame for frame identification.

As an example, the Wi-Fi receiver may identify the data frame according to the special sequence, and decode the data frame by means of the auto-encoder of the Wi-Fi receiver when successfully identifying the data frame.

In an optional embodiment, the data frame with the special sequence carries channel state information (CSI) content fed back.

In an optional embodiment, after transmitting a data frame with the special sequence to the Wi-Fi receiver by means of the auto-encoder of the Wi-Fi transmitter, the method further includes: a feedback message of the Wi-Fi receiver is monitoried; if no feedback message transmitted by the Wi-Fi receiver is detected within preset time, it is determined that the AI model parameters of the auto-encoder of the Wi-Fi transmitter need to be updated.

As an example, after completing transmitting the data frame with the special sequence to the Wi-Fi receiver, the Wi-Fi transmitter enters a monitoring phase, and can monitor a feedback message of the Wi-Fi receiver; if the feedback message transmitted by the Wi-Fi receiver is not detected within preset time, it is determined that the AI model parameters of the auto-encoder of the Wi-Fi transmitter need to be updated.

In an optional embodiment, in cases where the AI model parameters of the auto-encoder of the Wi-Fi transmitter need to be updated, a trigger frame with a special sequence is transmitted to the Wi-Fi receiver within an inter-frame interval, so as to trigger the auto-encoder of the Wi-Fi receiver to feed back new AI model parameters.

The inter-frame space specified in 802.11 is defined as follows:

$$aSIFSTime = 16\mu s(OFDM\ System)$$

$$Slottime = 9\mu s$$

$$aDIFSTime = aSIFSTime + 2 * Slottime$$

$$aEIFSTime = aSIFSTime + ACKTransmissionTIme + aDIFSTime$$

The SIFS refers to a short inter-frame space, and is equal to the time required for a node to switch from a transmitting state to a receiving state and correctly decode, or the time required for the node to switch from the receiving state to the transmitting state;
OFDM refers to orthogonal frequency-division multiplexing;

DIFS refers to distributed-coordination-function inter-frame space; and in the DCF protocol, a node needs to monitor, before starting data transmission, whether a channel is idle. If the channel is already idle, the node still needs to wait for a DIFS time period before starting data transmission; if the channel is monitored to be busy at any time during the DIFS time period, the node has to defer its data transmission.

The EIFS refers to an extended inter-frame space, which means that in the case of an error in the previous frame, the transmission node must delay for the EIFS instead of the DIFS time before transmitting the next frame.

As an example, in cases where the AI model parameters of the auto-encoder of the Wi-Fi transmitter need to be updated, transmitting a trigger frame with a special sequence is transmitted to the Wi-Fi receiver within the DIFS or the EIFS, so as to trigger the auto-encoder of the Wi-Fi receiver to feed back new AI model parameters.

It should be noted that the described exchange process can be achieved by a conventional Wi-Fi transmitter and a conventional Wi-Fi receiver, with the aim of ensuring that the conventional hardware, such as the AEs at the Wi-Fi transmitter and at the Wi-Fi receiver, work normally.

In an optional embodiment, the new AI model parameters fed back by the auto-encoder of the Wi-Fi receiver are received, and an acknowledgement message is transmitted to the Wi-Fi receiver.

As an example, the Wi-Fi transmitter may receive the new AI model parameters fed back by the auto-encoder of the Wi-Fi receiver within the SIFS, and transmit an acknowledgement message (ACK) to the Wi-Fi receiver, so as to notify the Wi-Fi receiver of whether it has been successfully received.

In order to further facilitate the understanding of those skilled in the art, the exchange flow within the DIFS time and the exchange flow within the EIFS time will be described in the following two embodiments:

Embodiment 1:

Fig. 4 is a schematic diagram of AI model parameter exchange within a DIFS time according to an embodiment of the present invention. As shown in Fig. 4, after completing transmitting or receiving once, a Wi-Fi device may enter a monitoring phase, wherein the monitoring time is the DIFS time in the figure. In this case, if an AP end needs to update the AI model parameters, the Wi-Fi transmitter may transmit a trigger frame with a special field to trigger the Wi-Fi receiver to transmit the new AI model parameters.

Upon receipt of the trigger frame, the Wi-Fi receiver may first match the special field on the trigger frame with a locally stored special field, and in the case of successful matching, the new AI model parameters required by the Wi-Fi transmitter are constructed according to the content on the trigger frame.

After an SIFS time, the Wi-Fi receiver can return the new AI model parameters to the Wi-Fi transmitter through the feedback link, and embedded the new AI model parameters into the neural network of the Wi-Fi transmitter. Then the interaction process is now completed.

Embodiment 2:

Fig. 5 is a schematic diagram of AI model parameter interaction within an EIFS time according to an embodiment of the present invention. As shown in Fig. 5, during the nth transmission process, the Wi-Fi transmitter first needs to transmit a frame that fails to pass verification, then enters the monitoring phase. The monitoring time is the EIFS time, as shown in the figure. If the Wi-Fi transmitter needs to update the model parameters, it can transmit a trigger frame with a special field to trigger the Wi-Fi receiver to transmit the AI model parameters.

Upon receipt of the trigger frame, the Wi-Fi receiver may first match the special field on the trigger frame with a locally stored special field, and in the case of successful matching, the new AI model parameters required by the Wi-Fi transmitter are constructed according to the content on the trigger frame.

When the Wi-Fi receiver feeds back the new AI model parameters to the Wi-Fi transmitter, compared with transmission over the DIFS time, transmission of continuous multi-frames can be allowed when the EIFS gap is used for transmission. For example, the AI model parameters may be divided into multiple portions and fed back to the Wi-Fi transmitter in multiple times; or complete AI model parameters may be transmitted multiple times and fed back to the Wi-Fi transmitter, and the Wi-Fi transmitter averages a plurality of complete AI model parameters.

After an SIFS time, the Wi-Fi receiver can return the new AI model parameters to the Wi-Fi transmitter through the feedback link, and embed the new AI model parameters into the neural network of the Wi-Fi transmitter. Then the interaction process is now completed.

After completing the reception, the Wi-Fi transmitter may transmit an ACK to the Wi-Fi receiver to notify the Wi-Fi receiver of successful receiving.

According to the embodiments of the present invention, an auto-encoder is provided at the Wi-Fi transmitter and the Wi-Fi receiver respectively, and after the AI model parameters are embedded into an auto-encoder of the Wi-Fi transmitter, a data frame with a special sequence is transmitted to the Wi-Fi receiver by means of the auto-encoder of the Wi-Fi transmitter, so that the Wi-Fi receiver identifies the data frame according to the special sequence, and decodes the data frame by means of the auto-encoder of the Wi-Fi receiver when successfully identifying the data frame. The auto-encoder improves the encoding efficiency and decoding accuracy of conventional Wi-Fi transmitters and receiver systems, thereby enhancing Wi-Fi network performance and user experience, and solves the problem in the related art that there is no specific implementation of applying AI/ML to WLAN, which fails to achieve the effect of enhancing network performance and user experience by means of AI/ML.

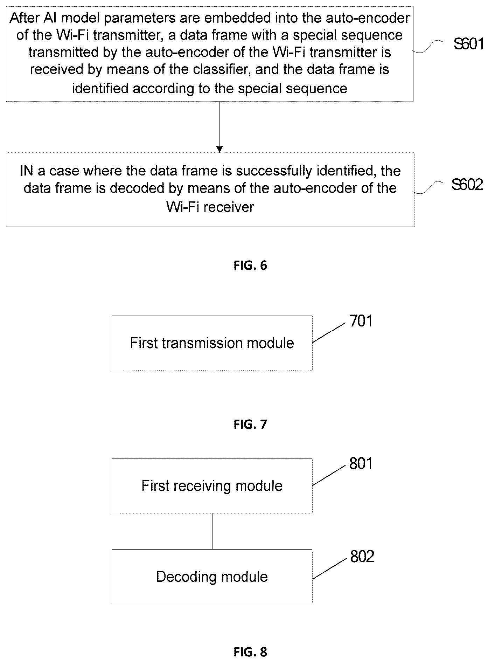

Provided in the present embodiment is another AI model parameter interaction method of a network architecture, running in the described Wi-Fi system. Fig. 6 is a flowchart of AI model parameter interaction according to another embodiment of the present invention, which is performed by a Wi-Fi receiver, wherein the Wi-Fi receiver includes an auto-encoder and a classifier of the Wi-Fi receiver. As shown in Fig. 5, the flow includes the following steps:

step S601: after AI model parameters are embedded into the auto-encoder of the Wi-Fi transmitter, a data frame with a special sequence transmitted by the auto-encoder of the Wi-Fi transmitter is received by means of the classifier, and the data frame is identified according to the special sequence.

As an example, after AI model parameters are embedded into the auto-encoder of the Wi-Fi transmitter, a data frame with a special sequence transmitted by the auto-encoder of the Wi-Fi transmitter is received by means of the classifier, and the data frame is identified according to the special sequence.

As an example, a data frame may be an encoded vector encoded by the AE of the Wi-Fi transmitter, and can be scrambled using a special pseudo noise (PN) sequence. The classifier can use a locally cached PN sequence for detection and identification.

Step S602: in a case where the data frame is successfully identified, the data frame is decoded by means of the auto-encoder of the Wi-Fi receiver.

As an example, the data frame can be an encoded vector encoded by the AE of the Wi-Fi transmitter. If the identification is successful, the encoded vector encoded by the AE of the Wi-Fi transmitter is transmitted to the AE decoder of the Wi-Fi receiver, and is decoded using the AE decoder of the Wi-Fi receiver, thereby improving the accuracy of the auto-encoder.

In an optional embodiment, after decoding the data frame by means of the auto-encoder of the Wi-Fi receiver, the method further includes: in a case where the AI model parameters of the auto-encoder of the Wi-Fi transmitter need to be updated, a trigger frame with a special sequence transmitted by the Wi-Fi transmitter is received; the trigger frame is identified according to the special sequence by means of the classifier; in a case where the trigger frame is successfully identified, the auto-encoder of the Wi-Fi receiver is trained to obtain new AI model parameters; and the new AI model parameters are fed back to the auto-encoder of the Wi-Fi transmitter.

As an example, in cases where the AI model parameters of the auto-encoder of the Wi-Fi transmitter need to be updated, the Wi-Fi transmitter may transmit a trigger frame with a special sequence to a classifier, and the classifier may identify the trigger frame according to the special sequence on the trigger frame.

As an example, upon successful identification, the Wi-Fi receiver can train the auto-encoder of the Wi-Fi receiver to obtain new AI model parameters, and feed back the new AI model parameters to the auto-encoder of the Wi-Fi receiver by means of the feedback link.

As an example, in the embodiments of the present invention, the Wi-Fi receiver bears the main operation work, i. e. training work, and the steps thereof are as follows:

1. normalizing data $s = [s_1, s_2, ... , s_n]$ to be transmitted, the normalization manner being as follows:

$$s_{norm} = \frac{1}{\sum_i ||s_i||^2} [\sqrt{s_1}, \sqrt{s_2}, \ldots, \sqrt{s_n}]$$

2. mapping the normalized data $s_{norm}$ to an encoded vector $x_k$ by means of an encoder

$$\mathbf{x_k} = f_i(f_{i-1}(\dots f_1(\mathbf{s_{norm}}|\boldsymbol{\theta_1})|\boldsymbol{\theta_{i-1}}|\boldsymbol{\theta_i})$$

3. mapping, by means of a decoder, the encoded vector $x_k$ to an estimate $\hat{s}_{norm,k}$ of the original data

$$\hat{\mathbf{s}}_{\mathbf{norm,k}} = f_j(f_{j-1}(\dots f_1(\mathbf{x}|\boldsymbol{\theta_1})|\boldsymbol{\theta_{i-1}}|\boldsymbol{\theta_i})$$

wherein $\hat{s}_{norm,k}$ represents an estimation of original data, and $\theta_i$ represents a trainable network parameter, i.e. $w_i$ and $b_i$;

The basic network element function $f_i(x)$ is generally expressed as follows:

$$f_i(x) = f_a(\mathbf{w_i} \odot \mathbf{x} + \mathbf{b_i})$$

wherein, "$\odot$" represents a network operator defined by the type of neural network; and common types of networks include dense neural networks (DNN), convolutional neural networks (CNN), and recurrent neural networks (RNN); $f_a(x)$ represents an activation function, and the activation function may include a Relu activation function, a Tanh activation function, a Sigmoid activation function, etc. 4. The network parameters are trained with a loss function. The loss function loss represents the difference between the deep learning evaluation module and the actual values. The loss function is defined using the mean square error as follows:

$$loss = \frac{1}{N} \sum_k ||\hat{\mathbf{s}}_{\mathbf{norm,k}} - \mathbf{s}_{\mathbf{norm,k}}||^2$$

Since the basic network element uses normalized evaluation parameters, a cross entropy can also be used as cost function:

$$loss = \frac{1}{N} \sum_k \mathbf{s}_{\mathbf{norm,k}} \log \hat{\mathbf{s}}_{\mathbf{norm,k}} + (1 - \mathbf{s}_{\mathbf{norm,k}}) \log(1 - \hat{\mathbf{s}}_{\mathbf{norm,k}})$$

The Wi-Fi receiver periodically calls the trainer for training. The Wi-Fi receiver can use the newly collected data during the current period to train the existing network, with the trainable parameters being $w_i$ and $b_i$. The training method is gradient descent, which can include algorithms such as an RMS Prop algorithm and an Adam algorithm. After the training is completed, the trained network parameters, i.e., $w_i$ and $b_i$, may be fed back to the Wi-Fi transmitter by means of a preset interaction mechanism. The data interacted in the feedback process is the trainable parameters of the encoder or decoder in the AE.

In an optional embodiment, identifying, by means of the classifier, the trigger frame according to the special sequence includes: the special sequence of the trigger frame is matched with a locally stored special sequence; and in a case where matching is successful, it is determined that the identification is successful.

As an example, the data field of the trigger frame may be a special sequence. Identifying the trigger signal involves matching the special sequence on the trigger frame with a locally stored feature sequence, wherein upon successful matching, it can be determined that the identification is successful, and the AE parameter exchange may be continued.

After the AI model parameters are embedded into the auto-encoder of the Wi-Fi transmitter, a data frame with a special sequence transmitted by the auto-encoder of the Wi-Fi transmitter is received by means of the classifier, and the data frame is identified according to the special sequence. In a case where the data frame is successfully identified, the data frame is decoded by means of the auto-encoder of the Wi-Fi receiver. The auto-encoder improves the encoding efficiency and decoding accuracy of conventional Wi-Fi transmitters and receiver systems, thereby enhancing Wi-Fi network performance and user experience, and solves the problem in the related art where there is no specific implementation of applying AI/ML to WLAN, which fails to achieve the effect of enhancing network performance and user experience by means of AI/ML.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present invention, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present invention.

The present embodiment further provides an AI model parameter interaction apparatus, the apparatus is used to implement the foregoing embodiments and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and conceived.

Fig. 7 is a structural block diagram of an AI model parameter interaction apparatus according to an embodiment of the present invention; the apparatus is located at a Wi-Fi transmitter, and the Wi-Fi transmitter includes an auto-encoder of the Wi-Fi transmitter As shown in Fig. 7, the apparatus includes:

a first transmission module 701, configured to, after AI model parameters are embedded into an auto-encoder of the Wi-Fi transmitter, transmit a data frame with a special sequence to a Wi-Fi receiver by means of the auto-encoder of the Wi-Fi transmitter, so that the Wi-Fi receiver identifies the data frame according to the special sequence, and decodes the data frame by means of an auto-encoder of the Wi-Fi receiver when successfully identifying the data frame.

In an optional embodiment, the apparatus further includes:

a monitoring module, configured to monitor a feedback message of a Wi-Fi receiver after a data frame with a special sequence is transmitted to a Wi-Fi receiver by means of the auto-encoder of the Wi-Fi transmitter;

a determination module, configured to determine, in a case where no feedback message transmitted by the Wi-Fi receiver is monitored within preset time, that the AI model parameters of the auto-encoder of the Wi-Fi transmitter need to be updated.

In an optional embodiment, the apparatus further includes:

a second transmission module, configured to, in a case where the AI model parameters of the auto-encoder of the Wi-Fi transmitter need to be updated, transmit a trigger frame with a special sequence to the Wi-Fi receiver within an inter-frame space, so as to trigger the auto-encoder of the Wi-Fi receiver to feed back new AI model parameters.

In an optional embodiment, the apparatus further includes:

a third transmission module, configured to receive the new AI model parameters fed back by the auto-encoder of the Wi-Fi receiver, and transmit an acknowledgement message to the Wi-Fi receiver.

In an optional embodiment, the data frame with the special sequence carries channel state information (CSI) content fed back.

Fig. 8 is a structural block diagram of an AI model parameter interaction apparatus according to another embodiment of the present invention. The apparatus is located at a Wi-Fi receiver, wherein the Wi-Fi receiver includes an auto-encoder and a classifier of the Wi-Fi receiver. As shown in Fig. 8, the apparatus includes:

a first receiving module 801, configured to, after AI model parameters are embedded into the auto-encoder of the Wi-Fi transmitter, receive, by means of the classifier, a data frame with a special sequence transmitted by the auto-encoder of the Wi-Fi transmitter, and identify the data frame according to the special sequence; and

a decoding module 802, configured to, in a case where the data frame is successfully identified, decode the data frame by means of the auto-encoder of the Wi-Fi receiver.

In an optional embodiment, the apparatus further includes:

a second receiving module, configured to, after decoding the data frame by means of the auto-encoder of the Wi-Fi receiver and in a case where the AI model parameters of the auto-encoder of the Wi-Fi transmitter need to be updated, receive a trigger frame with a special sequence transmitted by the Wi-Fi transmitter;

an identification module, configured to identify, by means of the classifier, the trigger frame according to the special sequence;

a training module, configured to, in a case where the trigger frame is successfully identified, train the auto-encoder of the Wi-Fi receiver to obtain new AI model parameters; and

a feedback module, configured to feed back the new AI model parameters to the auto-encoder of the Wi-Fi transmitter.

In an exemplary embodiment, the identification module may include:

a matching submodule, configured to match the special sequence of the trigger frame with a locally stored special sequence; and
a determination submodule configured to, in a case where matching is successful, determine that the identification is successful.

It should be noted that the modules above may be implemented by software or hardware, and the latter may be implemented in the following manner, but is not limited thereto. All the modules above are located in the same processor; or all the modules above are located in different processors in any arbitrary combination manner.

The embodiments of the present invention further provide a computer readable storage medium storing a computer program, wherein the computer program is configured to execute, when running, the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present invention further provide an electronic apparatus, including a memory and a processor; the memory stores a computer program, and the processor is configured to run the computer program, so as to execute the operations in any one of the method embodiments.

In an exemplary embodiment, the electronic device can further include a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present invention can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present invention is not limited to any specific hardware and software combinations.

The content above only relates to preferred embodiments of the present invention, and is not intended to limit the present invention. For a person skilled in the art, the present invention may have various modifications and changes. Any modifications, equivalent replacements, improvements, etc. made within the principle of the present invention shall all fall within the scope of protection of the present invention.

## Claims

1. An Artificial Intelligence, AI, model parameter interaction method, performed by a Wi-Fi transmitter, comprises an auto-encoder, and the method comprises:
after AI model parameters are embedded into an auto-encoder of the Wi-Fi transmitter, transmitting a data frame with a special sequence to a Wi-Fi receiver by means of the auto-encoder of the Wi-Fi transmitter, so that the Wi-Fi receiver identifies the data frame according to the special sequence, and decodes the data frame by means of an auto-encoder of the Wi-Fi receiver when successfully identifying the data frame.

2. The method according to claim 1, wherein after transmitting a data frame with the special sequence to the Wi-Fi receiver by means of the auto-encoder, the method further comprises:

monitoring a feedback message of the Wi-Fi receiver; and
in a case where no feedback message transmitted by the Wi-Fi receiver is monitored within preset time, determining that the AI model parameters of the auto-encoder of the Wi-Fi transmitter need to be updated.

3. The method according to claim 2, further comprising:
in a case where the AI model parameters of the auto-encoder of the Wi-Fi transmitter need to be updated, transmitting a trigger frame with a special sequence to the Wi-Fi receiver within an inter-frame space, so as to trigger the auto-encoder of the Wi-Fi receiver to feed back new AI model parameters.

4. The method according to claim 3, further comprising:
receiving the new AI model parameters fed back by the auto-encoder of the Wi-Fi receiver, and transmitting an acknowledgement message to the Wi-Fi receiver.

5. The method according to claim 1, wherein the data frame with the special sequence carries channel state information ,CSI, content fed back.

6. An Artificial Intelligence ,AI, model parameter interaction method, performed by a Wi-Fi receiver, comprises an auto-encoder and a classifier of the Wi-Fi receiver, and the method comprises:

after AI model parameters are embedded into the auto-encoder of the Wi-Fi transmitter, receiving, by means of the classifier, a data frame with a special sequence transmitted by the auto-encoder of the Wi-Fi transmitter, and identifying the data frame according to the special sequence; and
in a case where the data frame is successfully identified, decoding the data frame by means of the auto-encoder of the Wi-Fi receiver.

7. The method according to claim 6, wherein after decoding the data frame by means of the auto-encoder of the Wi-Fi receiver, the method further comprises:

in a cases where the AI model parameters of the auto-encoder of the Wi-Fi transmitter need to be updated, receiving a trigger frame with a special sequence transmitted by the Wi-Fi transmitter;
identifying, by means of the classifier, the trigger frame according to the special sequence;
in a case where the trigger frame is successfully identified, training the auto-encoder of the Wi-Fi receiver to obtain new AI model parameters; and
feeding back the new AI model parameters to the auto-encoder of the Wi-Fi transmitter.

8. The method according to claim 7, wherein identifying, by means of the classifier, the trigger frame according to the special sequence comprises:

matching the special sequence of the trigger frame with a locally stored special sequence; and
in a case where matching is successful, determining that identification is successful.

9. An Artificial Intelligence ,AI, model parameter interaction apparatus, located at a Wi-Fi transmitter, comprises an auto-encoder of the Wi-Fi transmitter, and the apparatus comprises:
a first transmission module, configured to, after AI model parameters are embedded into an auto-encoder of the Wi-Fi transmitter, transmit a data frame with a special sequence to a Wi-Fi receiver by means of the auto-encoder of the Wi-Fi transmitter, so that the Wi-Fi receiver identifies the data frame according to the special sequence, and decodes the data frame by means of an auto-encoder of the Wi-Fi receiver when successfully identifying the data frame.

10. An Artificial Intelligence ,AI, model parameter interaction apparatus, located at a Wi-Fi receiver, comprises an auto-decoder and a classifier of the Wi-Fi receiver, and the apparatus comprises:

a first receiving module, configured to, after AI model parameters are embedded into the auto-encoder of the Wi-Fi transmitter, receive, by means of the classifier, a data frame with a special sequence transmitted by the auto-encoder of the Wi-Fi transmitter, and identify the data frame according to the special sequence; and
a decoding module, configured to, in a case when the data frame is successfully identified, decode the data frame by means of the auto-encoder of the Wi-Fi receiver.

11. A computer readable storage medium, wherein a computer program is stored in the computer readable storage medium , and the computer program is configured to cause, when executed by a processor, the processor to perform steps of the method as claimed in any one of claims 1 to 5, or steps of the method as claimed in any one of claims 6 to 8.

12. An electronic device, comprising a memory, a processor, and a computer program that is stored in the memory and executable on the processor, wherein the processor is configured to execute the computer program to perform steps of the method as claimed in any one of claims 1 to 5, or perform steps of the method as claimed in any one of claims 6 to 8.

**FIG. 1**

**FIG. 2**

After AI model parameters are embedded into an auto-encoder
of the Wi-Fi transmitter, a data frame with a special sequence is
transmitted to a Wi-Fi receiver by means of the auto-encoder of
the Wi-Fi transmitter, so that the Wi-Fi receiver identifies the
data frame according to the special sequence, and decodes the
data frame by means of an auto-encoder of the Wi-Fi receiver
when successfully identifying the data frame

S301

FIG. 3

nth frame transmission ◄──── DIFS time ────► (n+1)th frame transmission

Trigger a peer end to feedback model parameters

SIFS time

Return model parameters

FIG. 4

nth frame transmission ◄──── EIFS time ────► (n+1)th frame transmission

Trigger a peer end to feedback model parameters

SIFS time

Return model parameters

SIFS time

Return model parameters

SIFS time

Return an ACK

FIG. 5

After AI model parameters are embedded into the auto-encoder of the Wi-Fi transmitter, a data frame with a special sequence transmitted by the auto-encoder of the Wi-Fi transmitter is received by means of the classifier, and the data frame is identified according to the special sequence — S601

IN a case where the data frame is successfully identified, the data frame is decoded by means of the auto-encoder of the Wi-Fi receiver — S602

**FIG. 6**

First transmission module — 701

**FIG. 7**

First receiving module — 801

Decoding module — 802

**FIG. 8**

## INTERNATIONAL SEARCH REPORT

| International application No. |
| --- |
| **PCT/CN2024/099939** |

| A. | CLASSIFICATION OF SUBJECT MATTER |
| --- | --- |

H04L41/14(2022.01)i; H04L41/16(2022.01)i; H04B 1/04(2006.01)i; H04B 1/16(2006.01)i; H04W84/12(2009.01)i

According to International Patent Classification (IPC) or to both national classification and IPC

| B. | FIELDS SEARCHED |
| --- | --- |

Minimum documentation searched (classification system followed by classification symbols)

IPC: H04L H04B H04W

Documentation searched other than minimum documentation to the extent that such documents are included in the fields searched

Electronic data base consulted during the international search (name of data base and, where practicable, search terms used)

CNTXT: VEN: CNKI; ENTXTC; IEEE: 人工智能, 机器学习, 自编码器, 模型, 识别, 检测, 特殊序列, 传统, AI, ML, WIFI, WLAN, AE, model, detect, sequence, CSI, legacy

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2023116618 A1 (HUAWEI TECHNOLOGIES CO., LTD.) 29 June 2023 (2023-06-29) description, page 14, line 5 to page 17, line 40 | 1-12 |
| A | WO 2023001143 A1 (VIVO MOBILE COMMUNICATION CO., LTD.) 26 January 2023 (2023-01-26) entire document | 1-12 |
| A | CN 114222202 A (SHANGHAI SHUCHUAN DATA TECHNOLOGY CO., LTD.) 22 March 2022 (2022-03-22) entire document | 1-12 |
| A | WO 2023082107 A1 (GUANGDONG OPPO MOBILE TELECOMMUNICATIONS CORP., LTD.) 19 May 2023 (2023-05-19) entire document | 1-12 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 September 2024** | **18 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/099939** |

| Patent document cited in search report | | | Publication date (day/month/year) | Patent family member(s) | Publication date (day/month/year) |
| --- | --- | --- | --- | --- | --- |
| WO | 2023116618 | A1 | 29 June 2023 | None | |
| WO | 2023001143 | A1 | 26 January 2023 | None | |
| CN | 114222202 | A | 22 March 2022 | None | |
| WO | 2023082107 | A1 | 19 May 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310810064